# EUROPÄISCHE PATENTSCHRIFT

(11) **EP 1 544 029 B1**
(45) Veröffentlichungstag und Bekanntmachung des Hinweises auf die Patenterteilung: **16.12.2009**
(21) Anmeldenummer: 04011715.2
(22) Anmeldetag: 18.05.2004
(51) Int. Cl.: B60N 3/06

(54) **An einem Fahrzeugboden anbringbare Fussstütze**
Footrest for mounting to a vehicle floor
Repose-pied pouvant être monté au plancher d'un véhicule

(30) Priorität: 19.12.2003 DE 10359766
(43) Veröffentlichungstag der Anmeldung: 22.06.2005
(73) Patentinhaber: Dr. Ing. h.c. F. Porsche Aktiengesellschaft, 70435 Stuttgart (DE)
(72) Erfinder: Nabert, Bernd, 72296 Schopfloch (DE); Lutz, Erwin, 71701 Schwieberdingen (DE); Diehm, Frank, 74366 Kirchheim (DE)

(56) Entgegenhaltungen:
- EP-A- 1 093 961
- DE-A1- 10 203 055
- DE-A1- 19 806 690
- DE-U1- 29 721 981

## Beschreibung

Bei der Erfindung wird ausgegangen von einer Fußstütze, die am Fahrzeugboden anbringbar ist, gemäß Oberbegriff des Anspruchs 1.

Eine gattungsbildende Fußstütze ist der DE 199 51 121 A1 zu entnehmen. Sie umfasst einen Grundkörper, der am Fahrzeugboden befestigbar ist. Der Grundkörper besitzt eine Montagefläche, auf der eine Trittplatte befestigt werden kann. Dafür ist zwischen Grundkörper und Trittplatte eine Befestigungseinrichtung vorgesehen, die bei der bekannten Fußstütze ein unteres, starres Hintergriffselement als erstes Befestigungselement aufweist, welches die Montagefläche durchsetzt und einen an dem Grundkörper vorgesehenen Vorsprung hintergreift. Neben dieser hakenartigen Befestigung weist die Befestigungseinrichtung noch ein oberes, zweites Befestigungselement auf, welches als Schraube ausgeführt ist, die die Trittplatte durchgreift und in dem Fahrzeugboden festgelegt ist.

Aus der GB 23 38 932 A ist ferner eine Fußstütze ersichtlich, die mit federnden Rastelementen an zwei vom Fahrzeugboden vorspringenden Laschen gehalten ist.

Aus der DE 198 06 690 A1 ist eine Befestigungseinrichtung für ein Bauteil an einer Trägerplatte bekannt. Die Trägerplatte weist schlüssellochartig ausgebildete Öffnungen auf, in die Pilzzapfen eingreifen, die an dem Bauteil angeordnet sind. Durch eine Relatiwerschiebung zwischen Bauteil und Trägerplatte hintergreifen die Pilzzapfen die Trägerplatte. Eine zusätzliche Nase am Bauteil greift in eine weitere Öffnung an der Trägerplatte ein und bildet so eine Verschiebesperre.

Aufgabe der Erfindung ist es, eine Fußstütze der eingangs genannten Art anzugeben, die eine einfache und schnelle Montage und Demontage am Grundkörper ermöglicht, wobei auch nach mehreren Montagevorgängen eine wirksame Sicherung der Befestigung gewährleistet sein soll.

Gelöst wird diese Aufgabe mit einer an einem Fahrzeugboden anbringbaren Fußstütze, die die Merkmale des Anspruchs 1 umfasst. Weitere, die Erfindung ausgestaltende Merkmale sind in den Unteransprüchen angegeben.

Die mit der Erfindung hauptsächlich erzielten Vorteile sind darin zu sehen, dass für die Befestigung der Trittplatte an dem Grundkörper diese lediglich mit ihren beiden Hintergriffselementen an dem Grundkörper eingehakt werden muss, und durch ein Eingreifen des Verschiebesperrelements in der Montagefläche die Trittplatte schließlich fixiert ist. Es wird also eine Dreipunkt - Befestigung vorgeschlagen, bei der auf die zeitaufwendige Anbringung von Schrauben verzichtet werden kann, was die Montagezeit verkürzt. Außerdem ist - bei Bedarf - die Trittplatte ohne Werkzeug wieder von dem Grundkörper abnehmbar. Die beiden Hintergriffselemente sind jeweils als ein Haken ausgeführt, dessen freies Hakenende in Richtung des Fahrzeugbodens weist. Beide Haken sind also gleichsinnig orientiert, so dass die Trittplatte einfach auf den Grundkörper aufgeschoben werden kann und die beiden Haken die Montagefläche hintergreifen. Zwischen der Montagefläche und der Trittplatte ist ein Bodenbelag, insbesondere Teppich, angeordnet, so dass ein zwischen Montagefläche und Trittplatte vorliegendes Spiel durch die Dicke des Bodenbelags ausgeglichen wird. Der Bodenbelag besitzt entsprechende Durchtrittsöffnungen, die mit den Befestigungsaufnahmen in der Montageplatte korrespondieren. Vorteilhaft ist, dass beim Aufsetzen der Trittplatte auf den Grundkörper und bei einer entsprechenden Relatiwerschiebung der Trittplatte auf dem Grundkörper die Trittplatte auf die Montagefläche gezogen wird, was durch die Auflaufschräge an den Haken erreicht wird. Um ein eventuell vorhandenes Spiel in Wirkrichtung des Verschiebeelements ausgleichen zu können, ist zwischen Montagefläche und der Rückseite der Trittplatte eine Sperrverzahnung als Verschiebesperre vorgesehen. Diese Sperrverzahnung kann beispielsweise mit dem Bodenbelag zusammenwirken und sich dort einhaken.

Bei einer Ausführungsform mit den in Anspruch 3 genannten Merkmalen ist vorteilhaft, dass bei entsprechender Relativstellung zwischen Trittplatte und Montagefläche das Verschiebeelement einfach in eine Öffnung in der Montagefläche einschnappen kann.

In einer Ausführungsform gemäß Anspruch 4 gehen die drei Befestigungselemente von einer Rückseite der Trittplatte aus und greifen in entsprechende Befestigungsaufnahmen ein, die an der Monatefläche ausgebildet sind. Selbstverständlich wäre es auch denkbar, zumindest eines der drei Befestigungselemente an der Montagefläche und die zugeordneten Befestigungsaufnahmen an der Trittplatte vorzusehen.

Nach einer Weiterbildung der Erfindung ist nach Anspruch 5 vorgesehen, die Haken L - förmig auszuführen, wobei der kurze Schenkel des Hakens eine Hakenwurzel bildet, die mit der Trittplatte verbunden ist. Die Schenkellänge ist dabei auf die Dicke des Bodenbelags abgestimmt und wird vorzugsweise so gewählt, dass die Trittplatte auf den Bodenbelag mit einer gewissen Kraft aufgepresst wird.

Die Erfindung wird nachfolgend anhand von Ausführungsbeispielen mit Bezug auf die Zeichnung näher erläutert.

Es zeigen:
- Fig. 1: in Schnittdarstellung einen Fahrzeugboden, an dem eine Fußstütze mit ihrem Grundkörper und einer Trittplatte befestigt ist,
- Fig. 2: eine Draufsicht auf die Trittplatte und
- Fig. 3: eine Seitenansicht der Trittplatte

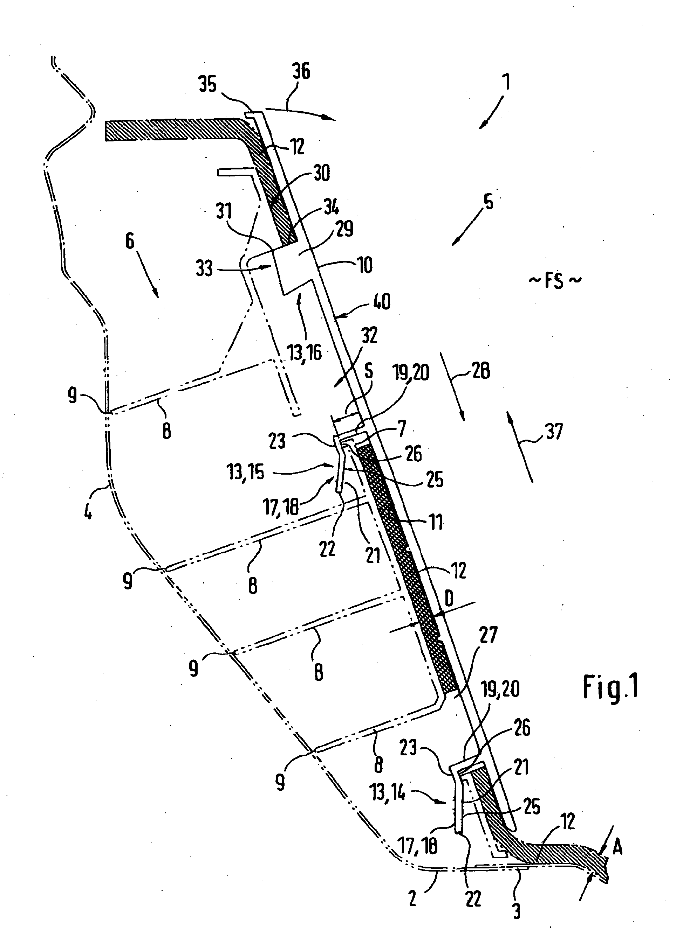

In Fig. 1 ist ausschnittweise ein Fahrzeuginnenraum 1 mit einem Fußraum FS eines hier nicht weiter dargestellten Kraftfahrzeugs zu sehen. An einem Fahrzeugboden 2, der von einem etwa horizontalen Abschnitt 3 in eine etwa aufrecht stehende Stirnwand 4 übergeht, ist eine Fußstütze 5 angebracht, die im gezeigten Ausführungsbeispiel im wesentlichen der Stirnwand 4 zugeordnet und an dieser befestigt ist. Mithin kann auf dieser Fußstütze 5 der Fuß (nicht dargestellt) eines Fahrers des Kraftfahrzeugs neben der hier nicht dargestellten Pedalerie im Fußraum FS des Kraftfahrzeugs abgestellt werden.

Die Fußstütze 5 besitzt einen Grundkörper 6, der als Hohlkörper ausgeführt sein kann, der eine Montagefläche 7 aufweist, von der mehrere Profilstege 8 ausgehen, die sich in Richtung zur Stirnwand 4 erstrecken und sich dort mit ihrem Ende 9 abstützen. Der Grundkörper 6 kann auf beliebige Art und Weise an dem Fahrzeugboden 2, insbesondere an der Stirnwand 4, befestigt oder ggf. einstückig mit dem Fahrzeugboden 2 ausgebildet sein. Die Montagefläche 7 ist - wie die Stirnwand 4 - etwa aufrecht orientiert und verläuft somit entlang der Stirnwand 4, jedoch mit Abstand dazu. Auf der Montagefläche 7 wird eine Trittplatte 10 der Fußstütze 5 befestigt. Zwischen einer Rückseite 11 der Trittplatte 10 und der Montagefläche 7 kann ein Bodenbelag 12 liegen, der sonst den Fahrzeugboden 2 bedeckt.

Für die Befestigung der vorzugsweise aus einem Kunststoff hergestellten Trittplatte 10 auf der Montagefläche 7 des Grundkörpers 6 ist eine Befestigungseinrichtung 13 vorgesehen, die zwischen Grundkörper 6 und Trittplatte 10 wirkt. Sie dient der Befestigung der Trittplatte 10 auf der Montagefläche 7 und umfasst in Reihe übereinander und mit Abstand zueinander angeordnete Befestigungselemente 14, 15, 16, die zumindest eine Dreipunkt - Befestigung bilden. Das erste, untere Befestigungselement ist mit dem Bezugszeichen 14 und das zweite, obere Befestigungselement mit dem Bezugszeichen 16 versehen. Dem dritten, mittleren Befestigungselement ist das Bezugszeichen 15 zugeordnet. Das erste und dritte Befestigungselement 14 und 15 sind im wesentlich identisch als starre Hintergriffselemente 17 ausgeführt, so dass im folgenden diese beiden Befestigungselemente 14 und 15 anhand des ersten Befestigungselements 14 beschreiben werden. Das Hintergriffselement 17 ist als Haken 18 ausgeführt, der im wesentlichen eine L - förmige Gestalt aufweist. Der kurze Schenkel 19 des Hakens 18 geht von der Rückseite 11 der Trittplatte 10 aus und erstreckt sich in Richtung zur Stirnwand 4. Nach unten abgewinkelt geht von dem somit eine Hakenwurzel 20 bildenden Schenkel 19 einstückig ein langer Schenkel aus, der einen Hintergriffsschenkel 21 bildet, der ein freies Hakenende 22 aufweist. Der Hintergriffsschenkel 21 besitzt neben einem etwa parallel zur Trittplatte 10 verlaufenden ersten Schenkelabschnitt 23 einen in Richtung zur Stirnwand abgebogenen, zweiten Schenkelabschnitt 24, der somit unter einem Winkel zur Rückseite 11 der Trittplatte 10 verläuft. Mithin bildet der lange Hintergriffsschenkel 21 eine der Rückseite 11 der Trittplatte 10 zugewandte Auflaufschräge 25 bzw. weist dieselbe auf, die mit einem Rand 26 einer als Durchbruch in der Montagefläche ausgebildeten Befestigungsaufnahme 27 für das Hintergriffselement 17 zusammenwirkt, welcher Rand 26 demnach von dem Hintergriffselement 17 umgriffen ist. Beim Aufsetzen der Trittplatte 10 auf die Montagefläche 7 treten die Hintergriffselemente 17 der Befestigungselemente 14 und 15 durch die zugeordneten Befestigungsaufnahmen 27 hindurch. Durch eine nach unten gerichtete Verschiebebewegung (Pfeil 28) der Trittplatte 10 werden die Hintergriffselemente 17 mit dem jeweiligen Rand 26 in Eingriff gebracht und ferner wird durch die Auflaufschrägen 25 die Trittplatte 10 in Richtung zur Monatagefläche 7 hingezogen.

Bei der Verschiebebewegung der Trittplatte 10 in Pfeilrichtung 28 gleitet zunächst das als Vorsprung 29 an der Rückseite 11 ausgebildete dritte Befestigungselement 16 auf einem oberen Abschnitt 30 der Montagefläche 7 bzw. dem Bodenbelag 12 entlang und schnappt bei entsprechender Verschiebestellung, einer Relativstellung zwischen Montagefläche 7 und Trittplatte 10, an einem Rand 31 einer weiteren Befestigungsaufnahme 32 vorbei, durchgreift diese Befestigungsaufnahme 32 und bildet mit dem Rand 31 eine Schnappeinrichtung, die ein Verschiebesperrelement 33 für die Trittplatte 10 darstellt, wodurch eine Relativverschiebung zwischen Trittplatte 10 und Montagefläche 7 verhindert ist. Es ist insbesondere vorgesehen, dass der Vorsprung 29 mit einer ebenen bzw. geraden Sperrfläche 34 ausgestattet ist, die dem Rand 31 zugewandt ist. Soll die Trittplatte 10 wieder von dem Grundkörper 6 abgenommen werden, wird lediglich ihr oberes Ende 35 in Pfeilrichtung 36 weg gebogen, bis die Sperrfläche 34 außer Eingriff mit dem Rand 31 kommt. Anschließend kann die Trittplatte 10 entgegen Pfeilrichtung 28 in Pfeilrichtung 37 weggezogen und somit von dem Grundkörper 6 entfernt werden. Die Trittplatte 10 ist beispielsweise aus einem biegbaren Kunststoff gefertigt.

Wie bereits erwähnt, liegt zwischen der Rückseite 11 der Trittplatte 10 und der Montagefläche 7 der Bodenbelag 12, der dazwischen eine Dicke D aufweist. Diese Dicke D wird durch die Schenkellänge S des kurzen Schenkels 19 des Hakens 18 bewirkt, da beim Montieren Trittplatte 10 auf der Montagefläche 7 der Bodenbelag 12 ausgehend von seiner Anfangsdicke A auf seine komprimierte Dicke D verfestigt wird, wenn die Trittplatte 10 durch die Auflaufschräge(n) 25 an die Montagefläche gezogen wird. Dadurch wird zwischen Montagefläche 7 und Trittplatte 10 eine gewisse Federkraft aufgebaut, die ein sicheres, klapperfreies Halten der Trittplatte 10 auf dem Grundkörper 6 ermöglicht und überdies eine Relativverschiebung der Trittplatte 10 auf dem Grundkörper 6 in gewissem Umfang verhindert. Im Bereich der Befestigungsaufnahmen 27 und 32 ist der Bodenbelag 12 mit entsprechenden Durchtrittsöffnungen für die Befestigungselemente 14, 15 und 16 versehen.

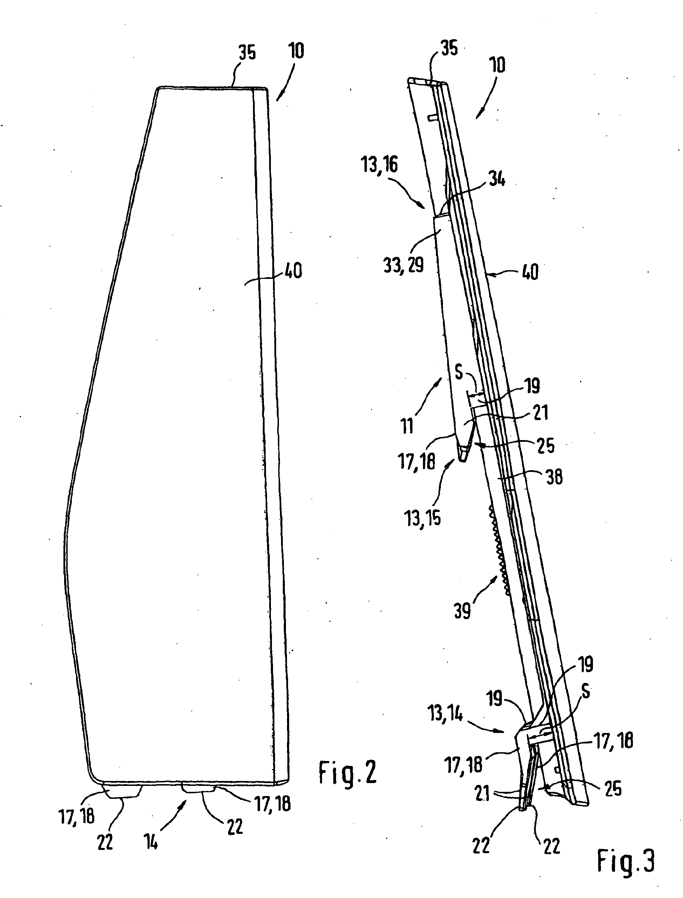

Zusätzlich oder alternativ kann - wie in Fig. 3 gezeigt - an einem von der Rückseite 11 entspringenden Längssteg 38 noch eine Verzahnung 39 als Sperrverzahnung vorgesehen sein, die als Verschiebesperre zwischen Trittplatte 10 und Montagefläche 7 wirkt und in Wirkrichtung (gleichgerichtet wie Pfeile 28 und 37) des Verschiebesperrelements 33 ein Relativverschiebung der Trittplatte 10 auf der Montagefläche 7 vermeidet. Diese Sperrverzahnung 39 ist insbesondere als Sägeverzahnung ausgeführt und kann entweder den Bodenbelag 12 in Durchtrittsöffnungen durchgreifen und mit einer entsprechenden Gegenverzahnung (nicht dargestellt) an der Montagefläche 7 zusammenwirken und/oder sich auf dem Bodenbelag 12 verhaken. Somit kann in der Wirkrichtung (Pfeil 28 und 37) eine Relativverschiebung zwischen Trittplatte 10 und Grundkörper 6 verhindert werden, so dass ein gewisses Spiel zwischen Sperrfläche 34 und Rand 31 bzw. Hakenwurzel 19 und Rand 26 nicht zu einem Verrutschen der Trittplatte 10 auf dem Grundkörper 10 führt.

Die Trittplatte 10 weist gemäß Fig. 2 an ihrer der Rückseite 11 gegenüberliegenden Trittseite 40 eine Anti - Rutscheinrichtung auf, die beispielsweise durch eine in die Trittseite 40 eingebrachte, Vertiefungen und/oder Erhebungen aufweisende Struktur oder durch einen entsprechenden Belag auf dieser Trittseite 40 bereit gestellt werden kann.

Aus den Fig. 2 und 3 wird noch ersichtlich, dass das untere Befestigungselement 14 zwei nebeneinander liegende Hintergriffselemente 17, insbesondere Haken 18, aufweisen kann, die im wesentlichen identisch ausgeführt sind, so dass für diese beiden Haken 18 vorstehende Beschreibung gilt. Fig. 3 zeigt außerdem, dass das Verschiebesperrelement 33 mit seinem Vorsprung 29 und das dritte Befestigungselement 15 einteilig realisiert sind. Die Trittplatte 10 mit den Befestigungselementen 14, 15 und 16 sowie der Sperrverzahnung 39 kann ferner einstückig als Kunststoffteil hergestellt sein. Im Übrigen sind in den Fig. 1 bis 3 gleiche bzw. gleichwirkende Teile mit den selben Bezugszeichen versehen.

## Patentansprüche

1. An einem Fahrzeugboden (2) anbringbare Fußstütze (5), die einen Grundkörper (6) mit Montagefläche (7), eine Trittplatte (10) und eine zwischen Grundkörper und Trittplatte wirkende Befestigungseinrichtung (13) aufweist, die die Trittplatte (10) auf der Montagefläche (7) hält, wobei die Befestigungseinrichtung (13) ein unteres, als starres Hintergriffselement (17) in Form eines Hakens (18) ausgebildetes erstes Befestigungselement (14) und ein oberes, zweites Befestigungselement (16) aufweist, wobei zwischen der Montagefläche (7) und der Trittplatte (10) ein Bodenbelag (12) angeordnet ist, **dadurch gekennzeichnet, dass** die Befestigungseinrichtung (13) zwischen dem oberen und unteren Befestigungselement (14, 16) zusätzlich ein drittes, als starres Hintergriffselement (17) in Form eines Hakens (18) ausgebildetes drittes Befestigungselement (15) besitzt, dass das obere Befestigungselement (16) als Verschiebesperrelement (33) ausgeführt ist, das eine Relatiwerschiebung zwischen Trittplatte (10) und Montagefläche (7) sperrt, dass die beiden als Haken (18) ausgeführten Hintergriffselemente (17) jeweils mit ihren freien Hakenenden (22) in Richtung des Fahrzeugsbodens (2) weisen, dass ein langer Schenkel (21) des Hakens (18) zumindest des dritten Befestigungselements (15) mit einer der Rückseite (11) der Trittplatte (10) zugewandten Auflaufschräge (25) ausgestattet ist, und dass zwischen Montagefläche (7) und Trittplatte (10) eine Sperrverzahnung (39) als Verschiebesperre vorgesehen ist.

2. Fußstütze nach Anspruch 1, **dadurch gekennzeichnet, dass** das Verschiebesperrelement (33) als Schnappverbindung ausgeführt ist.

3. Fußstütze nach Anspruch 1 oder 2, **dadurch gekennzeichnet, dass** das Verschiebesperrelement (33) als Vorsprung (31) mit gerader Sperrfläche (34) ausgebildet ist.

4. Fußstütze nach Anspruch 1, **dadurch gekennzeichnet, dass** die drei Befestigungselemente (14, 15, 16) von der der Montagefläche (7) zugewandten Rückseite (11) der Trittplatte (10) ausgehen und dass entsprechende Befestigungsaufnahmen (27, 32) für die Befestigungselemente (14, 15, 16) an der Montagefläche (7) ausgebildet sind.

5. Fußstütze nach Anspruch 1, **dadurch gekennzeichnet, dass** die Haken (17) L - förmig ausgeführt sind, wobei der kurze Schenkel (19) eine Hakenwurzel (20) bildet, die mit der Trittplatte (10) verbunden ist und der eine Schenkellänge (S) besitzt, die auf den zwischen Montagefläche (7) und Trittplatte (10) liegenden Bodenbelag (12) abgestimmt ist, und dass der lange Schenkel (21) des Hakens (18) das freie Hakenende (22) aufweist.

## Claims

1. Footrest (5) which can be mounted on a vehicle floor (2) and has a basic body (6) with a mounting surface (7), a pedal plate (10) and a fastening device (13) which acts between the basic body and pedal plate and holds the pedal plate (10) on the mounting surface (7), wherein the fastening device (13) has a lower, first fastening element (14) which is designed as a rigid engage-behind element (17) in the form of a hook (18), and an upper, second fastening element (16), wherein a floor covering (12) is arranged between the mounting surface (7) and the pedal plate (10), **characterized in that** the fastening device (13) additionally has, between the upper and lower fastening elements (14, 16), a third fastening element (15) which is designed as a rigid engage-behind element (17) in the form of a hook (18), **in that** the upper fastening element (16) is designed as a displacement-blocking element (33) which blocks a relative displacement between the pedal plate (10) and mounting surface (7), **in that** the two engage-behind elements (17) which are designed as hooks (18) each point with their free hook ends (22) in the direction of the vehicle floor (2), **in that** a long limb (21) of the hook (18) at least of the third fastening element (15) is provided with a run-on slope (25) facing the rear side (11) of the pedal plate (10), and **in that** a blocking toothing (39) is provided as a displacement block between the mounting surface (7) and pedal plate (10).

2. Footrest according to Claim 1, **characterized in that** the displacement-blocking element (33) is designed as a snap-in connection.

3. Footrest according to Claim 1 or 2, **characterized in that** the displacement-blocking element (33) is designed as a projection (31) with a straight blocking surface (34).

4. Footrest according to Claim 1, **characterized in that** the three fastening elements (14, 15, 16) emerge from the rear side (11) of the pedal plate (10), which side faces the mounting surface (7), and **in that** corresponding fastening receptacles (27, 32) for the fastening elements (14, 15, 16) are formed on the mounting surface (7).

5. Footrest according to Claim 1, **characterized in that** the hooks (17) are of L-shaped design, the short limb (19) forming a hook base (20) which is connected to the pedal plate (10), and said short limb having a limb length (S) which is matched to the floor covering (12) located between the mounting surface (7) and pedal plate (10), and **in that** the long limb (21) of the hook (18) has the free hook end (22).

## Revendications

1. Repose-pied (5) pouvant être monté au plancher d'un véhicule (2), ledit repose-pied comportant un corps de base (6) pourvu d'une surface de montage (7), d'une plaque marche-pied (10) et d'un dispositif de fixation (13) agissant entre le corps de base et la plaque marche-pied, ledit dispositif maintenant la plaque marche-pied (10) sur la surface de montage (7), le dispositif de fixation (13) comportant un premier élément de fixation (14) inférieur réalisé comme un élément de préhension par l'arrière (17) rigide prenant la forme d'un crochet (18) et un deuxième élément de fixation (16) supérieur, un revêtement de plancher (12) étant disposé entre la surface de montage (7) et la plaque marche-pied (10), **caractérisé en ce que** le dispositif de fixation (13) possède en outre, entre l'élément de fixation supérieur et inférieur (14, 16), un troisième élément de fixation (15) réalisé comme un élément de préhension par l'arrière (17) rigide prenant la forme d'un crochet (18), que l'élément de fixation supérieur (16) prend la forme d'un élément anti-glissement (33) qui bloque un mouvement de glissement relatif entre la plaque marche-pied (10) et la surface de montage (7), que les deux éléments de préhension par l'arrière (17) prenant respectivement la forme de crochets (18) pointent avec leurs extrémités de crochet (22) libres en direction du plancher du véhicule (2), qu'un bord long (21) du crochet (18) est équipé au moins du troisième élément de fixation (15) avec une inclinaison de glissement (25) orientée vers le côté arrière (11) de la plaque marche-pied (10) et que l'endentement de blocage (39) disposé entre la surface de montage (7) et la plaque marche-pied (10) prend la forme d'un dispositif anti-glissement.

2. Repose-pied selon la revendication 1, **caractérisé en ce que** l'élément anti-glissement (33) prend la forme d'une jonction à déclic.

3. Repose-pied selon la revendication 1 ou 2, **caractérisé en ce que** l'élément anti-glissement (33) prend la forme d'une saillie (31) pourvue d'une surface de blocage (34) droite.

4. Repose-pied selon la revendication 1, **caractérisé en ce que** les trois éléments de fixation (14, 15, 16) ressortent du côté arrière (11) de la plaque marche-pied (10) orienté vers la surface de montage (7) et que les logements de fixation (27, 32) correspondants sont réalisés au niveau de la surface de montage (7) pour les éléments de fixations (14, 15, 16).

5. Repose-pied selon la revendication 1, **caractérisé en ce que** les crochets (17) sont réalisés en L, le côté court (19) formant une racine de crochet (20) reliée à la plaque marche-pied (10) et possédant une longueur de côté (S) concordant avec le revêtement de plancher (12) positionné entre la surface de montage (7) et la plaque marche-pied (10) et que le côté long (21) du crochet (18) comprend l'extrémité libre (22) du crochet.
